# EUROPEAN PATENT APPLICATION

(11) **EP 1 623 633 A2**
(43) Date of publication of application: **08.02.2006**
(21) Application number: 05106996.1
(22) Date of filing: 28.07.2005
(51) Int. Cl.: A23N 12/08, A23L 1/225

(54) **Process for single-stage heat treatment and grinding of mustard bran, and product and its uses**

(30) Priority: 06.08.2004 US 912560
(71) Applicant: KRAFT FOODS HOLDINGS, INC., Northfield, Illinois 60093 (US)
(72) Inventor: Shah, Manoj, 60046, Lindenhurst (US); Ludwig, Cathy Jean, 60030, Grayslake (US); Almendarez, Maria Elena, 60640, Chicago (US); Budzik, Pauline Jean-Hsie, 60714, Niles (US); Jackson, Linda Kay, 60045, Lake Forest (US)
(74) Representative: Smaggasgale, Gillian Helen

(57) **Abstract**

A single-stage process for drying and grinding of mustard bran, such as wet mustard bran, in a single unit operation in a continuous manner. Heat-treated and ground mustard bran is achieved in a unique process described herein that combines these different treatments in a single-stage operation. The granulated mustard bran product obtained from the single-stage treatment of wet bran is useful in a wide variety of foodstuffs, such as a stabilizer, extender, thickener, binder, flavorant, and so forth.

## Description

### FIELD OF THE INVENTION

The invention generally relates to a process for single-stage drying and grinding of mustard bran, the resulting product, and its uses in foodstuffs.

### BACKGROUND OF THE INVENTION

Dijon mustard is typically prepared by coarsely grinding whole mustard seeds with liquids and flavorings such as water, vinegar, salt, and spices. The grinding results in a coarsely-textured mixture of mustard seed bran and mustard paste. Following such coarse grinding, the mustard seed bran is separated from the mustard paste by screening to produce a fine-textured, pungent mustard with a distinctive dijon flavor. Wet mustard bran thus is a side product of conventional processes for making dijon mustard pastes. Wet mustard bran contains high moisture content, such as about 55-60%. The high moisture content of wet mustard bran increases handling and storage needs with respect to the material. Previously, wet mustard bran typically has been discarded.

One known proposal for using at least part of wet mustard bran recovered as part of dijon mustard manufacture has involved performing an extraction treatment on the wet bran to separate its solids content from its water-soluble mustard flavoring content. However, the water-soluble bran extract is initially obtained in bulk liquid form, and thus the extract concentration can not be increased without performing a separate and additional water-removal operation. Application of a relatively high temperature heating procedure in an evaporator to separate the water content of wet bran in a short period of time tends to result in emissions of volatile mustard bran components. Wet bran has a high water binding capacity. Therefore, water removal techniques based on non-thermal procedures, such as ultrafiltration, centrifugation, freeze concentration, or freeze-drying, also may to be problematic. Also, water separation treatments performed on wet bran still result in some solid bran content remaining for disposal.

An arrangement is needed for reforming mustard bran, particularly wet mustard bran, at a high recovery rate in a form suitable for ready use in comestibles, which entails fewer process steps and equipment requirements. The invention addresses the above and other needs in an efficient and economically feasible manner.

### SUMMARY OF THE INVENTION

This invention provides a process for drying and grinding mustard bran, such as wet mustard bran, into a highly functional granular form in a single unit operation. This process combines and executes these different thermal and physical bran treatments in a single-stage operation that can be conducted in a continuous yet short-duration mode, and at a relatively low temperature condition for reducing volatile bran component emissions.

In one embodiment, the granular mustard bran is obtained by a single-stage treatment which possesses high water and fat binding capacity, and retains its mustard flavor and other useful functional attributes. Moreover, the single-stage treatment used to make the granular mustard bran reduces costs associated with handling unused food. Using the single-stage treatment of an embodiment of this invention, essentially all the mustard bran material may be incorporated into food products.

An edible granular mustard bran is obtained using the single-stage treatment which may be used as a food additive or ingredient for a wide variety of foodstuffs. For example, the dried and ground mustard bran obtained in accordance with an embodiment of this invention may be used as an economical and functional substitute stabilizer for standard mustard flour, and, for example, may be used as a replacement for mustard flour additives used in meat sauces. The dried and ground mustard bran also may be used as a meat extender or crumble. It also may be used as a mustard ftavorant, thickener, water binder, and/or lipid binder, in a foodstuff.

In one embodiment, the single-stage treatment of mustard bran, such as wet mustard bran, is conducted as a combined heat treatment and grindmg process in which compressed heated air and mustard bran are separately introduced into an enclosure that includes a truncated conical shaped section. After introduction, the compressed heated air travels generally along a downward path through the enclosure until it reaches a lower end thereof. The air flows back up from the lower end of the enclosure in a central region thereof until exiting the enclosure via an exhaust duct. The mustard bran is separately introduced into an upper end of the enclosure, and the bran becomes entrained in the heated air traveling downward through the enclosure until reaching the lower end of the enclosure.

During this movement of the mustard bran from the upper end of the enclosure down to the lower end thereof, the mustard bran is thermally and physically processed in mutually beneficial ways. The mustard bran is dehydrated by the heated air in which it is suspended in a dynamic air flow system. During the same unit operation, the mustard bran is disintegrated into small particles in an extremely short period of time. Significant amounts of the introduced mustard bran can be dried and ground before reaching a lower end of the enclosure. No moving mechanical parts are needed for effecting dehydration and grinding of the mustard bran, such as wet mustard bran.

Consequently, in these embodiments, a solid particulate product including dried and ground mustard bran is discharged and recovered from the lower end of the enclosure, while air and moisture vapor released from the mustard bran from drying is exhausted from the system via the exhaust duct. In one particular embodiment, the enclosure is a two-part structure including an upper cylindrical shaped enclosure in which the compressed heated air and mustard bran are separately introduced, and the cylindrical enclosure adjoins and fluidly communicates with a lower enclosure having the truncated conical shape that includes the lower end of the overall structure from which the processed feed material is dispensed.

The single-stage process for drying and grinding of mustard bran in a continuous manner in a single unit operation according to embodiments of this invention offers numerous advantages over conventional schemes for disposal of mustard bran such as wet mustard bran. For one, costs associated with transporting and disposing of a wet mustard bran stream are reduced or eliminated. Also, drying and grinding processes are achieved in a single-stage operation, without requiring different processes be performed in different equipment. Additionally, the process can be operated in a continuous mode as the compressed heated air is continuously exhausted from the system after entraining the mustard bran downward through the enclosure to its lower end, and ground mustard bran product material can be with drawn from the lower end of the enclosure in an air-tight manner, such as by using a rotary air-lock. These advantages reduce process complexity, production time, and production costs. Relatively little if any food residue is left on the inner walls of the processing unit, making it easy to clean and facilitating switching to a different type of food for processing within the unit. These advantages reduce process complexity, production time, and production service costs.

Although this invention is illustrated for processing mustard bran, it will be appreciated that the methods and equipment arrangements of this invention are generally applicable to other similar edible seed hulls.

### BRIEF DESCRIPTION OF THE DRAWINGS

Other features and advantages of the invention will become apparent from the following detailed description of preferred embodiments of the invention with reference to the drawings, in which:
FIG. 1 is a flow chart of a method for processing and using mustard bran according to an embodiment of this invention.
FIG. 2 is a schematic view of a system useful for processing mustard bran according to an embodiment of this invention.
FIG. 3 is a cross sectional view of the cyclone unit used in the processing system illustrated in FIG. 2.

The features depicted in the figures are not necessarily drawn to scale. Similarly numbered elements in different figures represent similar components unless indicated otherwise.

### DETAILED DESCRIPTION OF THE PREFERRED EMBODIMENTS

Preferred embodiments will be described below with specific reference to unique single-stage processing of wet mustard bran, although it will be appreciated that the process is to mustard bran of a broad range of moisture content. In a preferred embodiment, wet mustard bran is dried and ground in a single-stage process performed in one unit operation. In general, the single-stage process is implemented on a cyclonic system that may be operated in a manner whereby the mustard bran be thermally and physically acted upon at the same time within the same processing unit in a beneficial manner. A dried and ground mustard bran product is obtained in a granulated form (i.e., a solid fine particulate). The granular product is more stable for storage and handling before use in food production.

The granular mustard bran product may be in the form of a flowable dry powder or flour. A granular mustard bran may be produced from wet mustard bran by a relatively low temperature, short duration procedure with reduced emission levels of any volatile bran components. The granular mustard bran product is suitable for use in comestibles. The mustard bran well retains its flavor and functional attributes through the single-stage treatment, and the granular product may be stably stored and beneficially used as a food additive, such as a mustard flavorant, stabilizer, a water-binder, a fat-binder, a meat extender, a thickener, a mucilage source, and so forth.

For purposes herein, "drying" means dehydrating, i.e., reducing moisture content; and "grinding" a particle means crushing, pulverizing, abrading, wearing, or rubbing the particle to break it into smaller particles and/or liberate smaller particles, and includes mechanisms involving contact between moving particles, and/or between a moving particle and a static surface. A "wet mustard bran" is a mustard bran material containing at least about 14 wt.% moisture content, unless indicated otherwise.

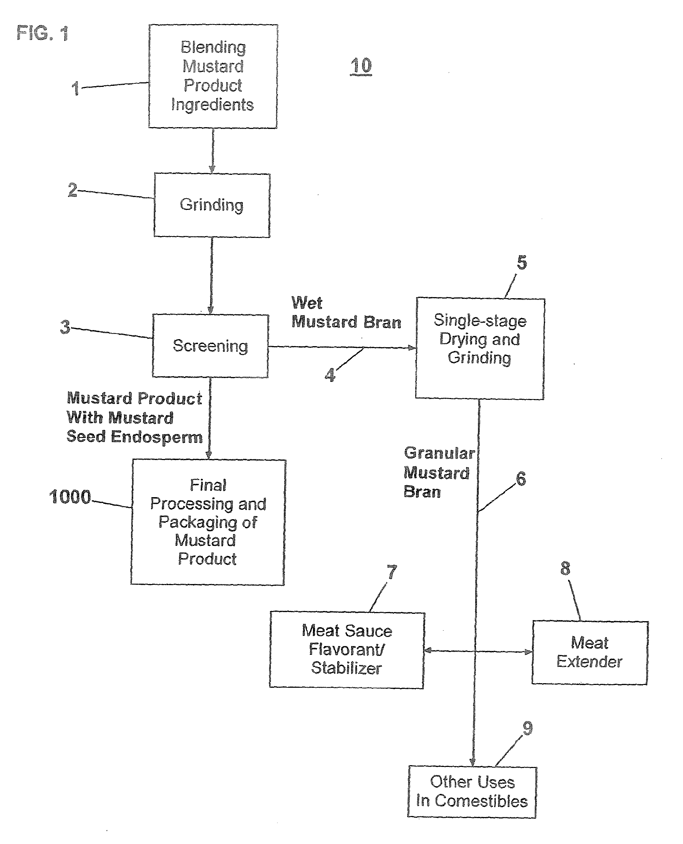

Referring to FIG. 1, in this illustrated embodiment wet mustard bran is recovered as a side product of dijon mustard production, and then is made available for use as a food additive. The invention, however, has general applicability to any wet mustard or mustard product production in which wet bran is a side product.

In this illustration, dijon mustard ingredients are added to a batch tank and thoroughly blended (step 1). The starting blend generally comprises a water-based slurry of suitably acidified and seasoned whole mustard seeds. The blended ingredients may include, but are not limited to, whole or crushed whole mustard seeds, water, vinegar, food acids, salt, spices, herbs, flavorants, vegetables, fruits, sweeteners, juices, extracts, starches, flours, thickeners, and so forth.

More pungent mustards may use brown mustard seeds (i.e., *Brassica juncea),* oriental mustard seeds (i.e., yellow-coated *Brassicajuncea),* and black mustard seeds (i.e., *Brassica nigra),* individually or in combinations thereof Both of the *Brassica juncea* types share similar chemical make-up, the average fixed-oil content tends to run somewhat higher in the oriental variety. The seeds of both may average about 2 mm in diameter, although other sizes are possible. The *Brassica nigra* seeds may be about 2 mm or less in size, or may have other sizes, but tend to be a little more oblong than spherical. Such mustards contain various levels of the volatile oil of mustard referred to as allyl isothiocyanate.

Milder mustards may be formulated using yellow, often called white, mustard seed (i.e., *Sinapis alba,* also referred to as *Brassica hirta*), which have a sharp tongue taste but not appreciable pungency. For example, yellow mustard seed may be used in conjunction with brown mustard seed in dijon mustards to ameliorate the high pungency produced by the brown seed. Yellow mustard seeds often are flattened laterally and average about 3 mm in diameter, or may have other sizes.

The mustard product manufacture may involve processing an individual mustard seed type or a blend of oriental, brown, black, and/or yellow mustard seeds. In one particular non-limiting embodiment, a combination of whole brown and yellow mustard seeds are included in a dijon mustard starting blend. For purposes herein, the term "dijon" refers generally to both continental dijon mustards which are free of yellow mustard seed, as well as so-called "dijon-style" mustards which may contain yellow mustard seeds alone or in combination with brown, oriental, and/or black mustard seeds.

Once blended into a slurry-like form, the dijon mustard ingredients are conveyed to a mill and the solid ingredients are reduced in size by wet grinding or milling (step 2). The slurry may be ground in a grinder device which is conventionally used or otherwise suitable for such food processing. The slurry may be ground sufficient to provide a mustard paste of a desirable or suitable consistency for the intended product. For example, the slurry may be milled to provide a viscosity of from about 7,000 to 25,000 centipoises.

The milling procedure also effectively liberates the bran (i.e., the husk) of the mustard seeds from the seed endosperm. The seed endosperm is effectively pulverized into a fine particulate while the mustard bran retains relatively larger size. The resulting freshly-milled mustard product has a chunky, coarse, paste-like form. The endosperm and bran are generally dispersed throughout the milled product.

The milled mustard product is passed through a screen to remove and separate spent mustard seed bran from the milled product (step **3**). For example, a Demoisy separator may be used, or other suitable separation equipment, for this purpose.

The undersize fraction composed of the mustard product containing the pulverized mustard seed endosperm, which passes through the separator, may be passed to a conventional deaerator to remove air, then is optionally aged, and then may be filled into a suitable container by a standard packaging filler (step **1000**). The equipment used for steps **1-3** and **1000** generally may correspond to those conventionally used for the applicable functions in the production of dijon mustard pastes. The wet mustard bran also may be obtained as a side product of other types of mustard product manufacture.

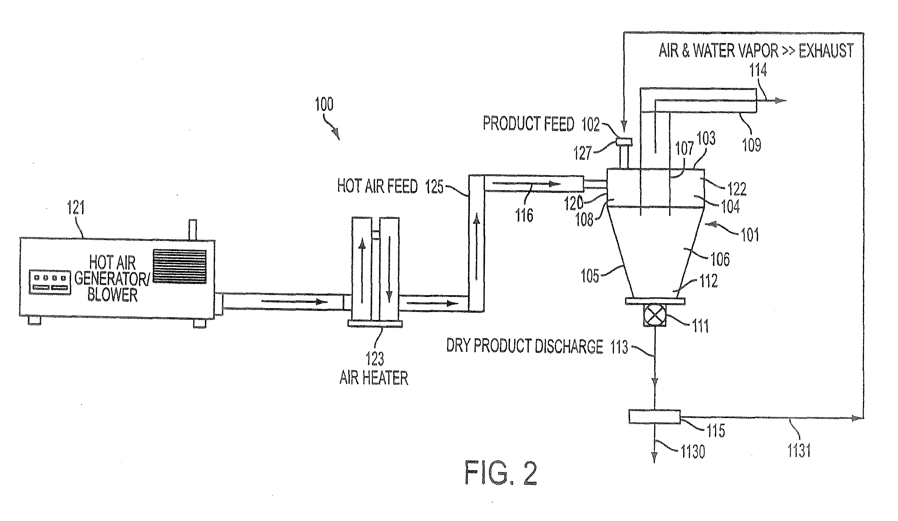

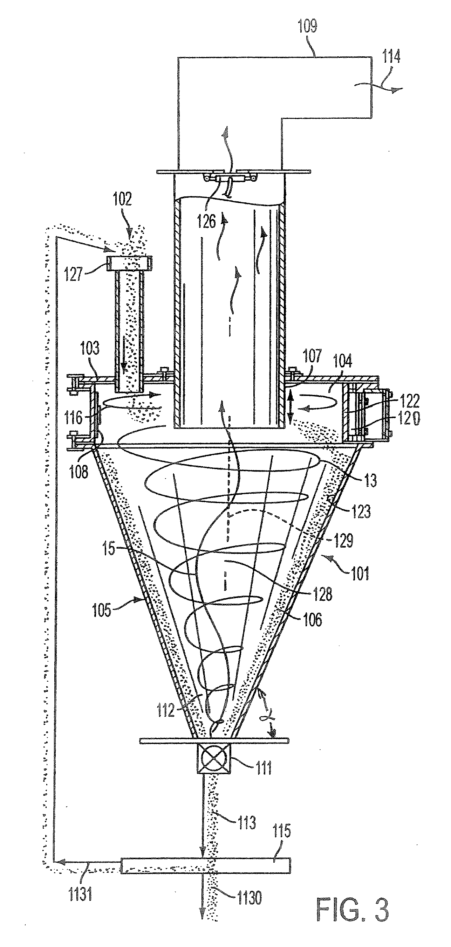

Referring again to FIG. 1, the wet mustard bran, and however obtained, is then dried and ground in a single-stage operation in step **4**. The granulated mustard bran product stream 6 obtained from that operation is useful for a wide variety of food additive applications (options **7, 8, 9**). Details of an exemplary equipment arrangement process of operating same for conducting the single-stage drying and grinding of the wet bran in step 4 is discussed hereinafter with reference to FIGS. 2 and 3.

Referring to FIG. 2, an exemplary system **100** for performing single-stage drying and grinding of wet mustard bran according to a process embodiment of this invention is shown. Cyclone **101** is a structural enclosure comprised of two fluidly communicating sections: an upper cylindrical enclosure **103** defining a chamber **104;** and a lower truncated conical shaped enclosure **105** that defines a cavity **106.** Both the upper and lower enclosures are annular structures in which a solid wall or shell encloses an interior space. In this illustration, the upper enclosure **103** has a generally uniform cross-sectional diameter, while the lower enclosure **105** tapers inward towards its lower end **112**. In a non-limiting embodiment, the taper angle α of lower enclosure **105** may range from about 66 to about 70 degrees. For purposes herein, the terminology "enclosure" means a structure that encloses a chamber, cavity, or space from more than one side.

Compressed heated air 116 and wet mustard bran 102 are separately introduced into the cyclone **101** at the upper enclosure **103.** The processed wet mustard bran is discharged as a solid particulate **113** from the lower end **112** of the cyclone **101.** A valve mechanism **111,** such as a rotary valve or rotary air-lock, is shown that permits extraction of dried, ground mustard bran product from the cyclone without interrupting continuous operation of the system and which minimizes leakage of the heated air from the cyclone **101.** If the cyclone **101** is operated without an air-lock or the like at the bottom discharge end of the cyclone **101,** the system may run less efficiently as heated air will be forced out of the lower end **112,** which may need to be compensated for in the air feed rate. Air, and moisture vapor released from the mustard bran during heat treatment within the cyclone **101,** is exhausted as exhaust gases **114** from the cyclone via sleeve **107** and exhaust duct **109.** Some amount of chaff may be liberated from the bran during their processing in the cyclone, and may be eliminated with the exhaust gas stream **114.** The exhaust gas stream **114** optionally may be particle filtered, and/or scrubbed to strip out sulfur-containing compounds or other compounds, such as using a separate scrubber module (not shown), e.g. a packed bed type scrubber, before it is vented to the atmosphere. Sieving device **115** is optional, and is described in more detail later herein. Generally, it can be used to redirect oversize or coarser product in particulate product **113** which may be re-introduced into the cyclone **101** for additional treatment by itself or in combination with fresh feedstock.

To introduce the compressed heated air **116** into cyclone **101**, an air pressurizing mechanism **121**, such as a blower or air compressor, generates a high volume, high velocity compressed air stream that is conducted via hot air ducting **125** through an air heater **123,** and from there is introduced into upper enclosure **103** of cyclone **101.** For purposes herein, the term "heated air" refers to air heated to a temperature above ambient temperature, e.g., above 25°C. The term "compressed air" refers to air compressed to a pressure above atmospheric pressure, e.g., above 14.7 psia (lb./inch² absolute). The term "compressed heat air" refers to air having both these characteristics. The compressed heated air **116** is introduced into chamber **104** substantially tangentially to an inner wall **108** of the upper enclosure **103**. This can be done, for example, by directing the heated air stream **116** to a plurality of holes **120** (e.g., 2 to 8 holes) circumferentially spaced around and provided through the wall **108** of the upper enclosure **103** through which the heat stream is introduced. Deflection plates **122** can be mounted on inner wall **108** of upper enclosure **103** for deflecting the incoming stream of heated air into a direction substantially tangential to the inner wall 108 according to an arrangement that has been described, for example, in U.S. patent application publication no. 2002/0027173 A1, which descriptions are incorporated herein by reference. The heated air may be introduced into the upper enclosure **103** of cyclone **101** in a counter-clockwise or a clockwise direction.

The introduced air **10** generally may be further pressurized cyclonically in the chamber **104** and cavity **106.** Due to the centrifugal forces present in the cyclonic environment, it is thought that the pressure nearer the outer extremities of the cavity **106** is substantially greater than atmospheric pressure, while the pressure nearer the central axis of the cavity **106** is less than atmospheric pressure. As shown in FIG. 3, as a non-limiting illustration, after being introduced into upper enclos **103**, the compressed heated air **116** spirals or otherwise travels generally along a large downward path as a vortex **13** through the upper enclosure **103** and the lower conical shaped enclosure **105** until it reaches a lower end **112** thereof. In this illustration, near the lower end **112** of the cavity **106** defined by the inner walls **123** of lower enclosure **105,** the downward direction of the air movement is reversed, and the air (and moisture vapor released from the mustard bran during heat treatment within the cyclone **101)** whirls back upwardly as a smaller vortex **15** generally inside the larger vortex **13**. The smaller vortex **15** flows back up from the lower end **112** of the lower enclosure **105** in a central region **128** located proximately near the central axis **129** of the cyclone 101 and generally inside the larger vortex **13**. The smaller vortex **15** flows upward until exiting the enclosure via sleeve **107** and then exhaust duct 109.

A vortex breaking means (not shown) optionally can be interposed below or inside the lower end **112** to encourage the transition of the larger vortex **13** to the smaller vortex **15**. Various vortex breaking arrangements for cyclones are known, such as the introduction of a box-shaped enclosure at the bottom of the conical enclosure.

The mustard bran **102** is separately introduced into upper enclosure 103. The introduced mustard bran drops gravitationally downward into chamber 104 until they become entrained in the heated air vortex **13** within cyclone **101**. Preferably, the mustard bran is introduced into upper enclosure **103** in an orientation such that they will fall into the cyclonic vortex **13** generated within cyclone **101,** where located in the space between the sleeve **107**, and inner wall **108** of the upper enclosure 103. This feed technique serves to minimize the amount of mustard bran that may initially fall into extreme inner or outer radial portions of the vortex where the cyclonic forces that the mustard bran experiences may be lower.

The entrained mustard bran travels in the vortex **13** of heated air that spirals downward through the lower enclosure **105** until reaching the lower end **112** of the lower enclosure **105.** During this downward flow path, the mustard bran is dehydrated by the heated air in which they are suspended in such a dynamic air-flow system. They also are ground during the downward flow path. The various dehydration and grinding effects on the mustard bran may occur at different respective times, several of the effects may occur simultaneously at a particular point or points in time, during the downward flow path of the mustard bran through the cyclone. White not desiring to be bound to any theory, it is thought that possible pressure-gradient and coriolis forces across, cavitation explosions, and the collision interaction between the mustard bran particles entrained in the high-velocity cyclonically pressurized air may be violently disruptive to the physical structure of that bran. Alternatively, or in addition thereto, the centrifugal force of the vortex may move the bran forcefully against inner walls **108** and **123** of the enclosure. These modes of attrition, individually or in combination, or other modes of attrition that may occur within the cyclone which may not be fully understood, bring about comminuting (grinding) of the mustard bran concurrent with drying it. As a result, during this movement of the mustard bran from the upper enclosure **103** down to the lower end **112** of the lower enclosure **105**, the mustard bran is thermally and physically processed in beneficial ways.

In a further embodiment of the invention, the discharged solid particulate product **113** can be screened, such as by using a screen sieve or other suitable particulate separation/classifying mechanism **115**, to sort and separate the finer fraction of ground mustard bran **1130** in the solid particulate product 113 that have particle sizes meeting a size criterion, such as being less than a predetermined size, which are suitable for post-grinding processing, from the coarser product fraction **1131.** The coarser (oversize) product fraction **1131** can be redirected into the upper enclosure of the cyclone for additional processing therein. A conveyor (not shown) could be used to mechanically transport the redirected material back to feed introducing means **127** or other introduction means in upper enclosure **103** of cyclone **101.** Also, feed introducing means **127** may be an inclined conveyor (not shown), which transports wet mustard bran feed from a lower location up to and into chamber **104** of the cyclone **101** at the upper enclosure **103.**

It will be appreciated that sleeve **107** can be controllably moved up and down to different vertical positions within cyclone **101.** In general, the lower sleeve **107** is spaced relative to the cavity **106,** the smaller the combined total volurrae of the cyclone **101** which is available for air circulation. Since the volume of air being introduced remains constant, this reduction in volume causes a faster flow of air, causing greater cyclonic effect throughout cavity **106** consequently causing the mustard bran to be ground to circulate longer in the chamber **104** and the cavity **106.** Raising the sleeve **107** generally has the opposite effect. For a given feed and operating conditions, the vertical position of sleeve **107** can be adjusted to improve process efficiency and yield.

Also, a damper **126** can be provided on exhaust duct **109** to control the volume of air permitted to escape from the central, low-pressure region of cavity **106** into the ambient atmosphere, which can affect the cyclonic velocities and force gradients within cyclone **101.** Other than the optional damper, the unit **101** generally requires no moving parts for operation.

By continually feeding mustard bran into cyclone **101**, a continuous throughput of dried and ground mustard bran product material **113** is obtained. A non-limiting example of a commercial apparatus that can be operated in a continuous manner while processing mustard bran according to processes of this invention is a WINDHEXE apparatus, manufactured by Vortex Dehydration Systems, LLC, Hanover Maryland, U.S.A. Descriptions of that type of apparatus are set forth in U.S. patent application publication no. 2002/0027173 Al, which descriptions are incorporated in their entirety herein by reference.

The cyclonic system **100** provides very high heat transfer rates from hot air to mustard bran for drying, and mechanical energy to crack and granulate mustard bran as it descends through the conical section of the dryer. The mustard bran product exiting the cyclone 101 exhibits a flowable flour type form. The one-stage process offers numerous advantages over conventional schemes for handling wet mustard bran, while eliminating the need for separate drying and grinding processes and equipment.

The single-stage processing unit is left relatively clean and tidy, as processed wet mustard bran material does not tend to cling as residue to the interior walls of the process unit used to grind the wet mustard bran into granular form. This can facilitate any desired change-over for processing a different type of feed material within the same unit.

In one process scheme for processing mustard bran, the introduction of the heated air comprises supplying compressed heated air at an inlet pressure within the range of from about 10 psig (lb./inch² gauge) to about 100 psig, particularly from about 40 psig to about 60 psig, and more particularly from about 42 psig to about 52 psig. The heated air generally is introduced into the cyclone at a temperature within the range of about 120°F to about 900°F, particularly about 120°F to about 375°F, more particularly about 120°F to about 350°F, and even more particularly about 240°F to about 350°F. In one aspect, the air temperature does not exceed about 250°F. At air temperatures below about 120°F, particularly at high ambient relative humidity conditions, the wet mustard bran may tend to cake or form pastes inside the cyclone unless the compressed air is also dehumidified before it is introduced into the cyclone. As the air temperature is increased, the air generally has more water holding capacity and wet mustard bran caking or pastiness is more easily avoided. If the air temperature is too high, the mustard bran may become heat damaged. The volumetric introduction rate of the heated air into the cyclone is within the range of from about 500 cubic feet per minute (CFM) to about 10,000 CFM, particularly from about 1,000 CFM to about 10,000 CFM, and more particularly from about 1,500 CFM to about 3,000 CFM. The feed rate of the wet mustard bran can vary, but generally may be in the range of about 1 to about 300 pounds per minute, particularly about 50 to about 150 lbs./min, for about a I to about a 10 foot diameter (maximum) cyclone. The cyclone diameter may be, for example, from about 1 to about 10 feet in diameter, and particularly about 1 to about 6 feet in diameter.

The wet mustard bran may be processed within the above-noted cyclone arrangement within a short period of time. In one embodiment, upon introducing the wet mustard bran into the cyclone, a dried and granulated product thereof is discharged from the processing unit within about 15 seconds, and particularly within about 1 to about 5 seconds. Moreover, substantially all the introduced wet mustard bran is discharged within the short period of time. In one aspect, the above-noted processing temperatures and durations applied during drying and grinding of the mustard bran are low enough to help prevent any significant volatization and exhaust of possible volatile mustard components from occurring during the treatment. After exiting the cyclone unit, volatile components in the exhaust also optionally may be handled by conducting the cyclone exhaust through a scrubber unit and the like (not shown).

The mustard bran that can be used in the process of this invention can be derived from commercial dijon mustard manufacture. The mustard bran can have sizes and geometries consistent with mustard bran side product of commercial dijon mustard manufacture and/or conventional mustard powder manufacture. Preferably, the mustard bran contains sufficient moisture content such that the material does not become damaged or aegraded from overheating during processing the cyclone. The mustard bran is a relatively light, non-dense material, so the co-presence of some moisture is thought to be useful for absorbing excess heat while it is being processed. Generally, the mustard bran used as the feed material contains about 6 wt% to about 99 wt.% moisture (i.e., water in liquid, frozen and/or vapor form). In one embodiment, the mustard bran used as the feed material contains about 14 wt.% to about 99 wt.% moisture, particularly about 30 wt.% to about 75 wt.% and more particularly about 55 wt.% to about 65 wt.% moisture, when introduced into the cyclone **101** of system **100**. The dried and ground mustard bran product generally contains about 1 wt.% to about 13 wt.% moisture, particularly about 1 wt.% to about 10 wt.%, and more particularly about 1 wt.% to about 5 wt.%. Ground mustard bran is obtained by the processes of this invention having commercially useful particle sizes. In one embodiment, the dried, ground mustard bran obtained by processing according to an embodiment of this invention generally may have an average particle size of about 1 micron to about 1,000 microns, particularly about 2 microns to about 1,000 microns. In one embodiment, the solid particulate product obtained as the bottoms of the cyclone comprise at least about 50% ground mustard bran having an average particle size of about 1 microns about 1,000 microns.

It will be appreciated that the methods and equipment arrangements of this invention are generally applicable to drying and grinding wet or moistened mustard seeds in which the seeds have an inner endosperm region surrounded by an outer layer of bran. It also will be appreciated that the arrangements are also applicable drying and granulating whole mustard seeds, used as feed material in part with or separate from mustard bran.

The granular mustard bran obtained in accordance with embodiments of this invention is edible and may be used in a wide variety of foodstuffs for a variety of purposes. It preferably does not have an unpleasant taste or odor, and may be easily processed with many foods. Such foods include, for example, sauces (e.g., meat sauces such as barbecue sauces, cooking sauces), mustard paste (i.e., mustard in condiment form), salad dressings, mayonnaise, meat-based products, soy-based products, baked goods, dough, batter, food gravies, soups, pizza toppings, and other condiments or food products.

In one embodiment, the granular mustard bran is used in placed of mustard flour in foodstuffs, such as in barbecue sauces, salad dressings, mayonnaise, some steak sauces, baked beans, cheese sauces, and so forth. Generally, a of yellow and oriental mustards without the bran has been used in mustard flour. The granulated mustard bran of embodiments of this serves as an economical replacement for standard mustard flour in such food products, and others. The granulated mustard bran has ability to contribute flavor and stabilize water and oil emulsions, whereby it may be used in lieu of mustard flour without adversely impacting such food products.

In another embodiment, the granular mustard bran also may be used as a vegetable-based meat extender or crumble. A "meat-extender" generally is added to ground meats to increase the quantity of the meats without substantially modifying the appearance, taste, or texture of the meat. In one embodiment, the granulated mustard bran may be used as a meat-extender in foodstuffs at levels of up to 20 vol.% or more, particularly about 1 to about 20 vol.%, and more particularly about 1 to about 10 vol.%. The granulated mustard bran generally may be easily processed with meats without loss of quality or flavor.

The meats that may be extended by the granulated mustard bran include, for example, beef, pork, lamb, poultry, organ meats, fish, and other animal tissues suitable for human consumption. The granulated mustard bran may be used as a meat-extender, for example, in ground or chopped meat-containing products. These meat-containing products, include, for example, pizza toppings, meat patties, meat balls, chili, Salisbury steak, meat sauces, frankfijfters, bologna, sausages, and so forth. In one preferred embodiment, the granular mustard bran is used to extend ground beef, sausage, and/or pepperoni content of tomato-based pizza toppings.

The granular mustard bran also may be used as a crumble or vegetable-based extender for meat substitutes (e.g., soy meal products). For example, the granular mustard bran may be used as a substitute for soy meal in soy protein patty type products. The granular mustard bran also may be used as a vegetable-based extender in combination with a soy product in meat-containing foodstuffs.

The granular mustard bran also may be used as a food thickener (i.e., viscosity controller). Mustard flavor is not needed or desirable in some additives, such as edible food binders. In one aspect, the amount of mustard flavor can be reduced in the granular mustard bran product by increasing the mustard bran's residence time within the cyclone. The residence time can be increased, e.g., by reducing the air throughout rate. The granulated mustard bran be used as a water-binding food additive. The gums naturally present in mustard bran act as an excellent water binder. The granulated mustard bran is cold water soluble, and stable through heating and freezing. The granulated mustard bran also may be used as a lipid-binding food additive, to take advantage of its relatively high lipid binding capacity. As the granulated mustard bran has both high water and lipid binding capacity, it is generally compatible for admixture with many types of foodstuffs. It may also be used as a filler for food products.

The granulated mustard bran is shelf stable and may be used to impart one or more of the above properties, or others, even after many months of storage, such as up to about twelve months storage/shelf life or more.

The Examples that follow are intended to illustrate, and not limit, the invention. All percentages are by weight, unless indicated otherwise.

### EXAMPLES

### Example 1:

A shelf life study was performed on dried, ground mustard bran packaged by itself and as a food product additive over a twelve month period, in which the granulated mustard bran was obtained by treatment of wet mustard bran using a vortex air-flow material grinding process according to an embodiment of this invention.

### Preparation of Granular Mustard Bran

Wet mustard bran (moisture content, 55%) was fed into a WINDHEXE apparatus for circular vortex air-flow material grinding. The wet mustard bran was obtained as a side product of a separate standard dijon mustard production line using whole mustard seeds which were used as part of a mustard paste starting slurry that was milled, and the wet mustard bran was then separated from the mustard paste according to a standard mustard paste production scheme. The WINDHEXE apparatus was manufactured by Vortex Dehydration Systems, LLC, Hanover, Maryland, U.S.A. The basic configuration of that type of apparatus is described in U.S. patent application publication no. 2002/0027173 A I, and reference is made thereto. The process unit had four inlet ports equidistantly spaced around the upper portion of the apparatus through which the compressed air stream was concurrently introduced in a counter-clockwise direction.

A four-foot diameter WINDHEXE apparatus was tested. The diameter size refers to the chamber size of the enclosure into which air and wet mustard bran introductions were made. The conditions of this experiment are described below. The feed rate of the wet mustard bran was set for an approximate discharge of 3 pounds solid product per minute, and approximately 20 pounds of mustard bran material was tested in the apparatus. The wet mustard bran was loaded into a hopper that directly fed onto a three-inch belt conveyor that fed into the WINDHEXE apparatus. Testing was performed in the 4-foot diameter WINDHEXE apparatus with compressed air introduced at 350°F, a heated air introduction rate of 2,500 cubic feet per minute (cfm) and pressure of 50 psig.

The powdered mustard bran product exiting the apparatus was in dried and finely ground form. The dried and granulated mustard bran was discharged from the bottom of the cyclone in about two seconds after the wet bran had been introduced into the processing unit. No emission of volatized mustard components was detected. The granulated bran product obtained had an average particle size of about 0.25 to 0.5 mm and a moisture content of about 1.8%. Additional studies have shown that feed rate and air temperature variation may be used to control the dry bran granulation and moisture content.

### Shelf-Life Study

A portion of the granulated product obtained was packaged in plastic bags in an air- and moisture-tight manner simulating standard "bag-in-a-box" packaging. Different samples of the bags were stored at different temperatures, which were 0°F, 72°F, and 85°F, to investigate any quality changes as the product was stored. After twelve months of storage, the granular mustard bran samples stored at each temperature showed no undesirable organoleptic or functional attributes.

In a separate shelf study conduct, a separate sample of the dried and ground mustard bran obtained was used to replace mustard flour in barbecue sauces. Mustard flour content of each of Kraft® Original barbecue sauce and Kraft® Bull's Eye® barbecue sauce were modified to replace the standard mustard flour content thereof with the dried, ground mustard bran at a 1:1 replacement ratio (i.e., an inclusion of about 0.263% mustard seed product), and otherwise the respective barbecue recipes were unchanged. The barbecue sauces were packaged in standard plastic containers used for the products. Different samples of bottles were stored at different temperatures, which were 45°F, 72°F, and some stored at 45°F and 72°F, over a period of about twelve months.

After about twelve months of storage, the organoleptic and functional properties of the barbecue sauces formulated with the mustard bran were indistinguishable from those made using standard formulations containing mustard flour. No separation of liquid phases was observed to occur within the bottled product formulated with the granulated mustard bran.

### Example 2:

A study was performed on dried, ground mustard bran used as a meat extender, in which the granulated mustard bran was obtained by treatment of wet mustard bran using a vortex air-flow material grinding process according to an embodiment herein.

### Preparation of Ciranular Mustard Bran

Separate testing was performed in the 4-foot diameter WINDI-IEXE apparatus with compressed air introduced at 350°F, 2,500 cfm and 50 psig. About 20 pounds of wet mustard bran (moisture content, 55%) obtained as a side product of a separate dijon mustard production line similar to Example 1 was introduced into the cyclone. The process converted the wet mustard bran into a dry and powdery material having a fine fraction having an average particle size of about 0.25 to 0.5 mm and a moisture content of 1.8%, and a coarse fraction having an average particle size of about 0.25 to 1.18 mm and moisture content of 9.5%.

Dried and granulated mustard bran was discharged from the bottom of the cyclone in about two seconds after the wet bran had been introduced into the processing unit. No emission of volatizcd mustard components was detected.

### Meat-Extender Study

The fine fraction of the dried and granulated mustard bran was evaluated as a meat extender in a pizza topping. The beef crumbles for the pizza topping were prepared as follows: 0-5% mustard bran; 71-76% raw ground beef; 5% textured soy protein concentrate; 4% salts, spices and other binders; 15% water. The beef crumbles were cooked and stirred until the center reached 175°F. The beef crumbles were added to the top of a cheese pizza with tomato sauce for organoleptic testing.

In particular, the addition of 1-5% of the dry mustard bran to the mixture of ground beef, textured soy protein, salt, spices, binders, and water increased the overall cooked yield of the beef crumble with mustard bran versus the crumble without mustard bran by 3-10%.

in a separate study, the addition of 1.5% dry mustard bran to a mixture of 65% raw ground pork, 5% textured soy protein, 7% salts, spices, and binders and 21.5% water increased the overall cooked yield of the meat crumble by 4%.

These studies demonstrated that wet mustard bran was successfully dried and ground in a single process operation and in a single piece of equipment to provide an organoleptically-acceptable and functionally-useful food additive.

### Example 3:

Dried, ground mustard bran which was mustard-deflavored was produced by processing mustard seeds similar as done in Example 1, except the feed rate of wet mustard bran was 6 lbs./min. instead of about 3 lbs./min. The granular mustard bran product obtained had a moisture content of 9%, and an average particle size of 0.5 mm. This product was relatively coarser and had a higher moisture content than that of Example 1.

The granular mustard bran product of this example was subject to sensory analysis, viz., sniff and taste testing, to assess the amount of mustard deflavoring that had occurred during the vortex processing. The mustard bran product of this example had and retained a distinct and noticeable mustard aroma and taste. By comparison, mustard bran product obtained under conditions similar to Example 1, in which the ratio of air/feed was reduced, had greatly diminished mustard bran aroma and taste.

While the invention has been particularly described with specific reference to particular process and product embodiments, it will be appreciated that various alterations, modifications and adaptations may be based on the present disclosure, and are intended to be within the spirit and scope of the present invention as defined by the following claims.

## Claims

1. A mustard bran granulation process, comprising:
introducing compressed heated air into an enclosure that includes a truncated conical shaped section, wherein the heated air travels along a generally downward path through the enclosure, including the conical section, to a lower end thereof, and the heated air reaching the lower end flows back up and exits the enclosure via an exhaust outlet;
introducing into the enclosure mustard bran which is entrained in the heated air traveling downward through the enclosure, wherein at least a portion of the mustard bran is dried and ground before reaching the lower end of the enclosure;
discharging a granular product including dried and ground mustard bran from the lower end of the enclosure.

2. A process for making and using vegetable-based crumble, comprising:
introducing compressed heated air into an enclosure that includes a truncated conical shaped section, wherein the heated air travels generally along a downward path through the enclosure, including the conical section, to a lower end thereof, and the heated air reaching the lower end flows back up and exits the enclosure via an exhaust outlet;
introducing into the enclosure mustard bran which is entrained in the heated air traveling downward through the enclosure, wherein at least a portion of the mustard bran is dried and ground before reaching the lower end of the enclosure;
discharging a granular product including dried and ground mustard bran from the lower end of the enclosure; and
mixing the granular product with a meat-flavored substance.

3. The process of Claim 2, wherein the meat-flavored substance comprises meat.

4. The process of Claim 2, wherein the meat-flavored substance comprises a meat substitute containing soy protein.

5. The process of any one of Claims 1 to 4, wherein the mustard bran contains about 14 wt.% to about 99 wt.% moisture when introduced; and the dried and ground mustard bran contains about 1 wt.% to about 13 wt.% moisture.

6. The process of any one of Claims 1 to 5, wherein the mustard bran contains about 55 wt.% to about 65 wt.% moisture when introduced.

7. The process of any one of Claims 1 to 6, wherein the mustard bran has an average particle size of about 1 to about 1,000 microns.

8. The process of any one of Claims 1 to 7, wherein the solid particulate product comprises at least about 50% ground mustard bran having an average particle size of about 1 to about 1,000 microns.

9. The process of any one of Claims 1 to 8, wherein the introducing of the heated air comprises supplying compressed heated air at a pressure within the range of from about 10 psig to about 100 psig.

10. The process of any one of Claims 1 to 9, wherein the introducing of the heated air comprises supplying compressed heated air at a pressure within the range of from about 40 psig to about 60 psig.

11. The process of any one of Claims 1 to 10, wherein the introducing of the heated air comprises supplying the heated air at a temperature within the range of about 120°F to about 900°F.

12. The process of any one of Claims 1 to 11, wherein the introducing of the heated air comprises supplying the heated air at a temperature within the range of about 240°F to about 350°F.

13. The process of any one of Claims 1 to 12, wherein the introducing of the heated air comprises supplying the heated air at a rate of within the range of from about 500 cubic feet per minute to about 10,000 cubic feet per minute.

14. The process of any one of Claims 1 to 13, wherein the introducing of the heated air comprises supplying the heated air at a rate within the range of from about 1,500 cubic feet per minute to about 3,000 cubic feet per minute.

15. The process of any one of Claims 1 to 14, further comprising exhausting moisture vapor released from the wet mustard bran during drying via the exhaust outlet.

16. The process of any one of Claims 1 to 15, wherein the introducing of the heated air into the upper cylindrical enclosure occurs in a direction oriented generally tangentially to inner walls of the cylindrical enclosure.

17. The process of any one of Claims 1 to 16, wherein the upper cylindrical enclosure has a substantially constant diameter of about 1 to about 10 feet, and the lower enclosure comprises a truncated conical shape having a maximum diameter size where the lower enclosure adjoins the cylindrical enclosure and the maximum diameter of the lower enclosure is substantially the same as the diameter of the cylindrical enclosure.

18. A granulated mustard bran prepared from mustard bran in a method comprising introducing compressed heated air into an enclosure that includes a truncated conical shaped section, wherein the heated air travels generally along a downward path through the enclosure, including the conical section, to a lower end thereof, and the heated air reaching the lower end flows back up and exits the enclosure via an exhaust outlet; introducing into the enclosure mustard bran which is entrained in the heated air traveling downward through the enclosure, wherein at least a portion of the mustard bran is dried and ground before reaching the lower end of the enclosure; discharging a granular product including dried and ground mustard bran from the lower end of the enclosure; and collecting the discharged granular product.

19. A food product comprising a granulated mustard bran prepared from mustard bran in a method comprising introducing compressed heated air into an enclosure that includes a truncated conical shaped section, wherein the heated air travels along a downward path through the enclosure, including the conical section, to a lower end thereof, and the heated air reaching the lower end flows back up and exits the enclosure via an exhaust outlet; introducing the enclosure mustard bran which is entrained in the heated air traveling downward through the enclosure, wherein at least a portion of the mustard bran is dried and ground before reaching the lower end of the enclosure; discharging a granular product including dried and ground mustard bran from the lower end of the enclosure; and combining the granular product with a different food substance.

20. The food product of Claim 24, comprising barbecue sauce.

21. The food product of Claim 23 or 24, comprising pizza topping.

22. The food product of any one of Claims 19 to 21, wherein the granulated product is substantially free of mustard flavor.

23. The food product of any one of Claims 19 to 22, wherein the mustard bran contains about 55 wt.% to about 65 wt.% moisture when introduced; and the dried and ground mustard bran contains about 1 wt.% to about 13 wt.% moisture.
